# EUROPEAN PATENT APPLICATION

(11) **EP 4 592 928 A1**
(43) Date of publication of application: **30.07.2025**
(21) Application number: 23906516.2
(22) Date of filing: 09.11.2023
(51) Int. Cl.: G06Q 10/30, B09B 3/40, C08J 11/00

(54) **METHOD OF RECYCLING USED TIRE, METHOD OF MANUFACTURING PYROLYSATE, PYROLYSATE, METHOD OF MANUFACTURING RUBBER PRODUCT, RUBBER PRODUCT, METHOD OF MANUFACTURING TIRE, AND TIRE**

(30) Priority: 19.12.2022 JP 2022202462
(71) Applicant: BRIDGESTONE CORPORATION, Chuo-ku Tokyo 104-8340 (JP)
(72) Inventor: TAHARA, Seiichi, Tokyo 104-8340 (JP); HOJO, Masahiro, Tokyo 104-8340 (JP); OKUNO, Akira, Tokyo 104-8340 (JP); OKINAGA, Yuki, Tokyo 104-8340 (JP); KUNO, Marino, Tokyo 104-8340 (JP); OGURA, Kenta, Tokyo 104-8340 (JP)
(74) Representative: Marks & Clerk LLP
(86) International application number: PCT/JP2023/040465
(87) International publication number: WO 2024/135145

(57) **Abstract**

A method of recycling used tires that includes: a collection step (S1) of collecting used tires; a data acquisition step (S2) of acquiring used tire data regarding at least one of specifications or components of the used tires, based on information read from the used tires; a classification step (S3) of classifying the used tires; and a recycling processing step (S4) of carrying out recycling processing of the used tires that have been classified, under appropriate conditions for each of the groups.

## Description

### TECHNICAL FIELD

The present disclosure relates to a method of recycling used tires, a method of producing pyrolysate, pyrolysate, a method of producing a rubber product, a rubber product, a method for producing a tire, and a tire.

### BACKGROUND

Conventionally, recycling has been carried out by pyrolyzing organic waste and extracting pyrolysate from produced oil for reuse. For example, Patent Literature (PTL) 1 describes a pyrolysate oil processing system that can separate class 1 petroleum to obtain good quality recycled oil by controlling temperature immediately above a liquefied component collection means.

### CITATION LIST

### Patent Literature

PTL 1: JP 2014-240460 A

### SUMMARY

### (Technical Problem)

Used tires comprise compound material and are therefore generally difficult to recycle. Further, used tires are sometimes classified by size based on maximum size that can be handled by recycling facilities, but conventionally, used tires are rarely classified in any other way. As a result, used tires including various components are recycled together, resulting in variations in quality of pyrolysate obtained. Accordingly, it is difficult to maintain quality of recycled products such as tires that are made from pyrolysate obtained in recycling. Further, in order that quality of pyrolysate be uniform, processing is required, resulting in poor recycling efficiency.

In view of such circumstances, it would be helpful to provide a method of recycling used tires, a method of producing pyrolysate, pyrolysate, a method of producing a rubber product, a rubber product, a method of producing a tire, and a tire that can improve product quality and recycling efficiency in recycling.

### (Solution to Problem)

(1) A method of recycling used tires according to an embodiment of the present disclosure includes:
   a collection step of collecting used tires;
   a data acquisition step of acquiring used tire data regarding at least one of specifications or components of the used tires, based on information read from the used tires;
   a classification step of classifying the used tires into groups based on the used tire data; and
   a recycling processing step of carrying out recycling processing of the used tires that have been classified, under appropriate conditions for each of the groups.
(2) The method of recycling used tires according to (1), as an embodiment of the present disclosure, wherein,
   in the data acquisition step, the information read from the used tires includes identification numbers of the used tires, and the used tire data is acquired by accessing, via a network, a database in which the identification numbers are associated with the used tire data.
(3) The method of recycling used tires according to (1) or (2), as an embodiment of the present disclosure, wherein
   the used tire data includes at least one of data on category, type, size, rubber property, producer, or date of production of the used tires, and
   the classification step classifies the used tires based on at least one of category, type, size, rubber property, producer, or date of production of the used tires.
(4) The method of recycling used tires according to (1) or (2), as an embodiment of the present disclosure, wherein
   the used tire data includes data regarding at least one of a polymer, a filler, or sulfur component of the used tires, and
   the classification step classifies the used tires based on the data regarding at least one of the polymer, the filler, or the sulfur component of the used tires.
(5) The method of recycling used tires according to any one of (1) to (4), as an embodiment of the present disclosure, wherein
   the used tire data includes data on structure of members of the used tires.
(6) The method of recycling used tires according to any one of (1) to (5), as an embodiment of the present disclosure, wherein,
   in the classification step, a plurality of stages of grouping are executed based on rubber blends of treads or state of wear of the used tires.
(7) The method of recycling used tires according to any one of (1) to (6), as an embodiment of the present disclosure, wherein,
   in the classification step, grouping is executed based on compound content or degree of reduction of oil, age resistor, wax, or adhesive material in the used tires.
(8) The method of recycling used tires according to any one of (1) to (7), as an embodiment of the present disclosure, wherein
   the used tire data includes material information indicating a fiber type of an organic fiber.
(9) A method of producing pyrolysate according to an embodiment of the present disclosure includes:
   a collection step of collecting used tires;
   a data acquisition step of acquiring used tire data regarding at least one of specifications or components of the used tires, based on information read from the used tires;
   a classification step of classifying the used tires into groups based on the used tire data;
   a recycling processing step of carrying out recycling processing, which is pyrolysis, on the used tires that have been classified, under appropriate conditions for each of the groups; and
   an extraction step of extracting pyrolysate produced by the pyrolysis.
(10) Pyrolysate according to an embodiment of the present disclosure is
   produced by the method of producing pyrolysate according to (9).
(11) A method of producing a rubber product according to an embodiment of the present disclosure wherein
   pyrolysate produced by the method of producing pyrolysate according to (9) is used as a portion of raw material to produce the rubber product.
(12) A rubber product according to an embodiment of the present disclosure is
   produced by the method of producing a rubber product according to (11).
(13) A method of producing a tire according to an embodiment of the present disclosure wherein
   pyrolysate produced by the method of producing pyrolysate according to (9) is used as a portion of raw material to produce the tire.
(14) A tire according to an embodiment of the present disclosure is
   produced by the method of producing a tire according to (13).
(15) A method of recycling used tires according to an embodiment of the present disclosure includes:
   a collection step of collecting used tires;
   a data acquisition step of acquiring used tire data regarding at least one of specifications or components of the used tires, based on information read from the used tires;
   a step of disassembling the used tires into component members;
   a classification step of classifying the component members of the used tires into groups based on the used tire data;
   a recycling processing step of carrying out recycling processing of the component members of the used tires that have been classified, under appropriate conditions for each of the groups.

### (Advantageous Effect)

According to the present disclosure, a method of recycling used tires, a method of producing pyrolysate, pyrolysate, a method of producing a rubber product, a rubber product, a method of producing a tire, and a tire that can improve product quality and recycling efficiency in recycling can be provided.

### BRIEF DESCRIPTION OF THE DRAWINGS

In the accompanying drawings:
FIG. 1 is a diagram illustrating an example configuration of a recycling system that executes a method of recycling used tires according to an embodiment of the present disclosure;
FIG. 2 is another diagram illustrating an example configuration of the recycling system illustrated in FIG. 1;
FIG. 3 is a diagram illustrating first used tire data;
FIG. 4 is a diagram illustrating second used tire data; and
FIG. 5 is a flowchart illustrating processing of a method of recycling used tires according to an embodiment of the present disclosure.

### DETAILED DESCRIPTION

Hereinafter, with reference to the drawings, a method of recycling used tires, a method of producing pyrolysate, pyrolysate, a method of producing a rubber product, a rubber product, a method of producing a tire, and a tire according to an embodiment of the present disclosure are described. In each drawing, identical or equivalent parts are marked with the same reference sign. In description of the present embodiment, description of identical or equivalent parts is omitted or simplified as appropriate.

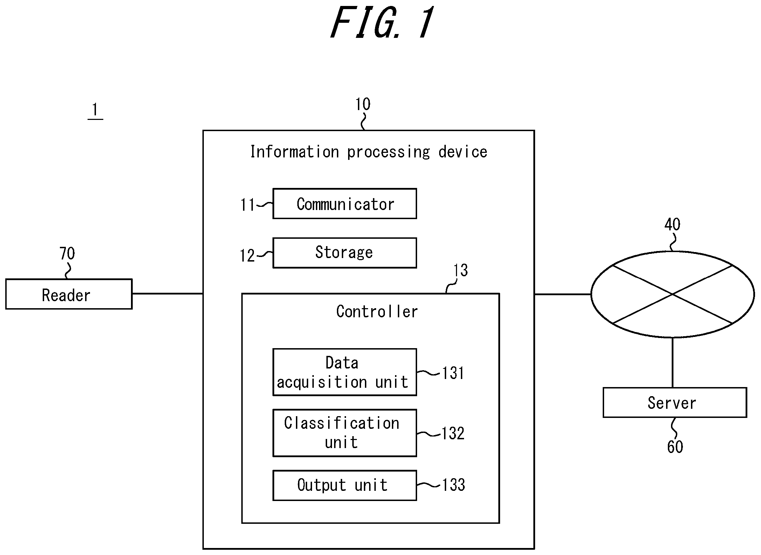

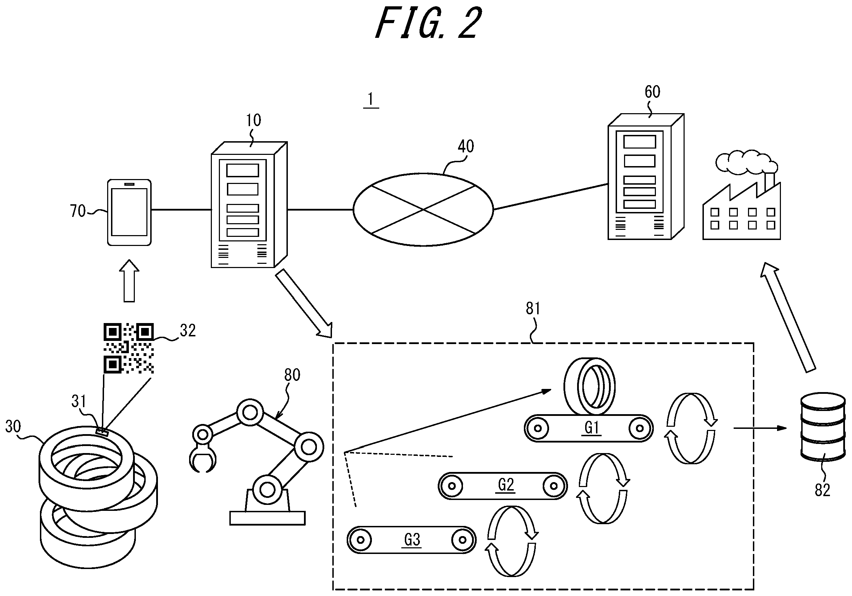

FIG. 1 and FIG. 2 are diagrams illustrating an example configuration of a recycling system 1 that executes a method of recycling used tires according to an embodiment of the present disclosure. The recycling system 1 includes an information processing device 10. The information processing device 10 is a device installed in a recycling facility, for example, to control the recycling facility. FIG. 1 is a block diagram including an example internal configuration of the information processing device 10. FIG. 2 illustrates overall structure of the recycling system 1.

The recycling system 1 recycles tires 30. The tires 30 to be recycled are used tires and include, for example, scrap tires resulting from tire replacement, scrapped vehicles, and the like, and end-of-life tires (ELT) that have reached the end of life as tires. According to the present embodiment, the tires 30 are for passenger cars, trucks, buses, and other vehicles, but may be for aircraft, mining or agricultural use, for example, and are not limited by tire type. When the tires 30, which are used tires, are pyrolyzed in a pyrolysis furnace, gas, oil, carbon black, wire, and ash are produced. According to the present embodiment, oil, in particular, is described as pyrolysate 82. However, the pyrolysate 82 is not limited to oil, and may be carbon black, for example, and may be other products. The pyrolysate 82 that is extracted is processed as required to a state of being usable as raw material, and recycled by being used as a portion of raw material for the tires 30 at a factory for the tires 30. Here, the pyrolysate 82 that is extracted and processed products thereof may be used as a portion of raw material for a rubber product other than the tires 30 in a factory for the rubber product. Oil and the like extracted by pyrolysis of used tires includes components (sulfur content [wt%] as an example) depending on the used tire. Reducing variation in quality of the pyrolysate 82 is important in order to maintain quality of the tires 30 or a rubber product that use the pyrolysate 82 as a raw material.

As illustrated in FIG. 1, the information processing device 10 includes a communicator 11, a storage 12, and a controller 13. The controller 13 includes a data acquisition unit 131, a classification unit 132, and an output unit 133. The information processing device 10 may be a computer, for example, as a hardware configuration. Details of components of the information processing device 10 are described below. Here, a recycling facility in which the information processing device 10 is installed is not limited to a facility in which all processing up to pyrolysis is performed at one location. For example, as described below, the facility that carries out the classification of used tires and the facility that carries out pyrolysis may be in different locations or be run by different business operators. When the recycling facility comprises a plurality of facilities, the information processing device 10 may be configured not as a single device, but as a plurality of devices that are located at each facility and can send and receive data therebetween over a network 40. The information processing device 10, as a hardware configuration, may comprise a single computer or may comprise a plurality of computers connected by the network 40. When the system comprises a plurality of computers, the storage 12 may be a shared memory or the like that can be accessed by each computer.

The information processing device 10, together with the server 60 connected by the network 40, may constitute the recycling system 1. The network 40 may be, for example, the Internet. Further, the network 40 may comprise, for example, a local area network (LAN). Further, the recycling system 1 may comprise a reader 70 and a recycling facility device connected to the information processing device 10.

The server 60 is a separate computer from the information processing device 10, for example. According to the present embodiment, the server 60 is a computer of a producer of the tires 30, which stores and manages information regarding the tires 30 to be produced in a database. The information processing device 10 can access the database via the network 40. The information processing device 10 retrieves used tire data from the database regarding at least one of specifications or components of the used tires 30 (used tires) for appropriate recycling. Conventionally, information regarding the tires 30 has been used only at the production location (factory) and rarely used in recycling. According to the present embodiment, the system illustrated in FIG. 2 can be configured so that the information processing device 10 can make use of the used tire data in subsequent recycling, in classification and the like.

The reader 70 may be a general-purpose mobile terminal, such as a smartphone or a tablet device, for example, but is not limited to being such a mobile terminal as long as the reader 70 has an imaging function. The reader 70, as another example, may be an imaging device such as a camera. The reader 70 may be used by a manager, operator, or the like of the recycling facility.

According to the present embodiment, the tires 30 are each marked with an indicator 31 that includes an identifier 32. The indicator 31 may be provided by adhering, printing, or kneading into the rubber of the tire 30. The reader 70 may image capture the identifier 32 marked on the tire 30 by the imaging function and output an image of the identifier 32 to the information processing device 10. The controller 13 of the information processing device 10 may identify the identification number, model number, or the like individually marked on the tire 30 based on the identifier 32. The imaging function may be realized by, for example, a camera of the reader 70. The identifier 32 may be, for example, a two-dimensional bar code, but is not limited to this example. For example, a bar code, a marker indicating a specific color, a serial code, or the like may be used as the identifier 32. Further, the identification number may comprise letters, reference signs, or the like, and not just numbers. The identifier 32 is not limited to a dedicated identifier, and may be, for example, a product name, a manufacturer name, various reference signs, or the like displayed on a tire side portion or the like. A marker indicating a specific color is not limited to colors that can be discerned by the human eye, but includes, for example, a very small amount of color that can be detected by a device and a color in the invisible light range.

The recycling system 1 is not limited to a configuration that includes the indicator 31 and the reader 70 that has an imaging function. As another example, the recycling system 1 may comprise an RFID tag and a reader 70 that reads radio waves from the RFID tag. In such a case, the controller 13 may obtain information such as a number, a model number, or the like of the tire 30 from the reader 70. As another example, the recycling system 1 may comprise a marker substance mixed into rubber and the reader 70 that detects the marker substance. Here, the marker substance is an identifier that distinguishes a specific rubber from other rubber.

The components of the information processing device 10 are described in detail below. The communicator 11 includes at least one communication module configured to connect to the network 40. The communicator 11 may include, for example, a communication module compatible with a mobile communication standard such as 4G (fourth generation) or 5G (fifth generation). The communicator 11 may include, for example, a communication module compatible with a wireless LAN standard (IEEE 802.11 as an example). Further, the communicator 11 may include a communication module compatible with a wired LAN standard, for example.

The storage 12 includes at least one memory. The memory may be any memory, including but not limited to semiconductor memory, magnetic memory, or optical memory, for example. The storage 12 may be built into the information processing device 10, for example, and may be configured to be accessed externally from the information processing device 10 via any interface.

The storage 12 stores various data used in various calculations executed by the controller 13. Further, the storage 12 may store results and intermediate data of various calculations executed by the controller 13.

Further, the storage 12 may store used tire data obtained via the communicator 11. As described above, the used tire data includes data regarding at least one of specifications or components of used tires. The used tire data is referenced to classify and recycle the tires 30 that are used tires. The used tire data stored in the storage 12 may, for example, be updated based on a database of the producer of the tires 30, periodically or when the recycling facility is started up. Component information on a used tire may be acquired from new condition product information, or may be inferred based on the condition of the used tire or corrected from the new condition product information. For example, based on the identifier 32, an identification number, a model number, or the like of the tire 30 may be specified and product information managed according to the identification number, the model number, or the like may be acquired. Further, for example, when a used tire is worn, a correction may be made to subtract a portion of a tread rubber blend or a compound from the new condition product information, depending on the state of wear.

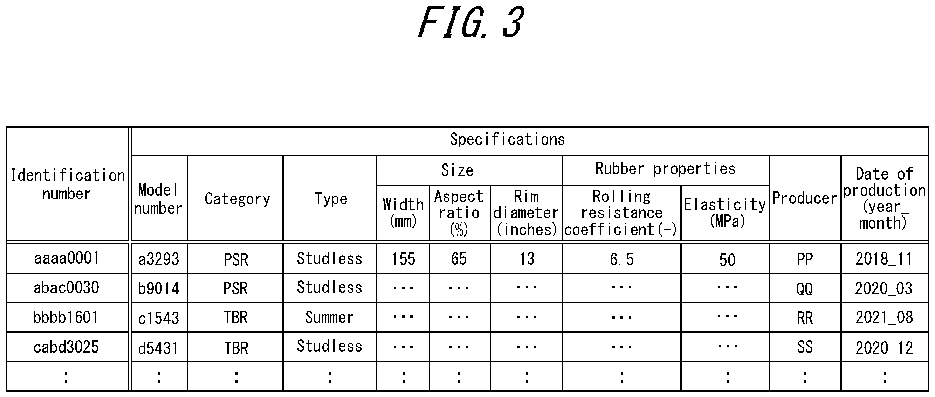

FIG. 3 is a diagram illustrating first used tire data. The first used tire data mainly comprises data about specifications of a used tire. In the example in FIG. 3, the first used tire data is a table in which an identification number individually assigned to a used tire is associated with a model number and other specifications of the used tire. Further, the first used tire data may include at least one of data on category, type, size, rubber property, producer, or date of production of the used tire. The category of used tire may be a classification by vehicle type, such as, for example, passenger car radial (PSR), truck and bus radial (TBR), and the like. The type of used tire may be a classification by function, for example, studless, run-flat, summer, or the like. The size of the used tire may be a numerical value of a specification, for example, width, aspect ratio, rim diameter, or the like. The rubber property of the used tire may be a numerical value indicating performance, for example, rolling resistance coefficient, elastic modulus, or the like. The producer of the used tire may be, for example, the name of the manufacturer. The date of production of the used tire may be, for example, the year and month of production. The first used tire data may be a portion of data managed and stored in a database by the producer of the tire 30 that became the used tire. The information processing device 10 may access the database via the network 40 to obtain the first used tire data and store the first used tire data in the storage 12. Here, the first used tire data may further include data on the structure of members of the used tires. Data on the structure of members may be, for example, data on arrangement, shape, size, hardness, or the like of each member, such as tread, sidewall, and the like. Data on the structure of members may include, for example, drawings illustrating cross-sections, images, or the like.

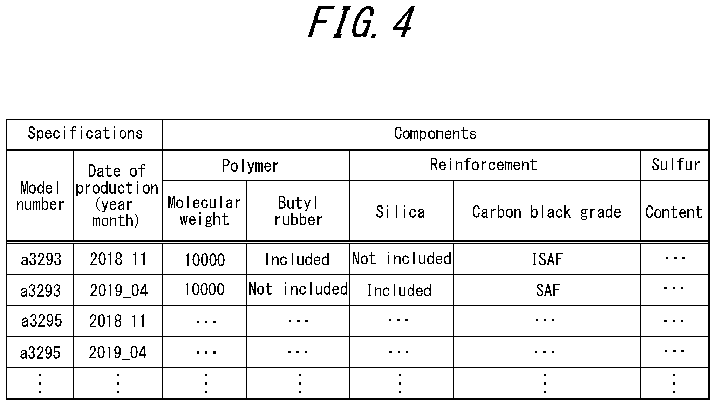

Further, FIG. 4 is a diagram illustrating second used tire data. The second used tire data mainly comprises data about components of used tires. In the example in FIG. 4, the second used tire data is a table in which a portion of specifications of a used tire (model number and production date) is associated with component information, such as blend, polymer molecular weight, and the like of members of the used tire. The second used tire data may include data regarding at least one of a polymer, a filler, or sulfur component of the used tire. Data regarding a polymer component of the used tire may be, for example, information on molecular weight, whether butyl rubber is included, and the like. Here, a filler is blended to reinforce rubber composition, for example carbon black. Further, aside from carbon black, inorganic fillers such as silica, clay, talc, calcium carbonate, aluminum hydroxide, and the like are examples. Data regarding a filler component of the used tire may be, for example, information on whether silica is included, carbon black grade, and the like. The carbon black grade may have a classification such as, for example, super abrasion furnace (SAF; super wear resistance), intermediate SAF (intermediate wear resistance), or the like. Data regarding a sulfur component of the used tire may be, for example, a numerical value of amount (content). The second used tire data may be a portion of data managed and stored in a database by the producer of the tire 30 that became the used tire. The information processing device 10 may access the database via the network 40 to obtain the second used tire data and store the second used tire data in the storage 12. Here, the second used tire data may further include data on a polymer, a filler and sulfur and different compounds, and a regulated substance.

Here, as described above, the second used tire data is a table in which a portion of specifications of a used tire is associated with component information of the used tire. Therefore, the first used tire data can be associated with the second used tire data through used tire specifications included in both sets of data. According to the present embodiment, the used tire data is managed as two tables, but the used tire data may be integrated and managed as a single table. Further, according to the present embodiment, the used tire data is stored in the storage 12 by information processing device 10. As another example of management, decentralized management may be performed regarding used tire data. For example, used tire data may be stored and managed using blockchain technology.

The controller 13 is at least one processor. The processor may be, but is not limited to, a general-purpose processor or a dedicated processor specialized for particular processing, and may be any processor. The controller 13 controls operation of the information processing device 10 as a whole. Further, the controller 13 controls recycling processing at the recycling facility where the information processing device 10 is installed.

Referring again to FIG. 2, the recycling facility includes a collector 80 used to collect used tires. The collector 80 is a device different from the information processing device 10, controlled by the information processing device 10, and may include, for example, a robotic hand. Further, according to the present embodiment, the recycling facility includes a classifier 81 used to classify used tires into groups. The classifier 81 is a device different from the information processing device 10, controlled by the information processing device 10, and may include, for example, a belt conveyor. In the example in FIG. 2, three groups are indicated as G1 to G3, but the number of groups is not limited to three. Further, according to the present embodiment, the recycling facility includes a recycling processor for recycling processing according to conditions for each group. The recycling processor is a device different from the information processing device 10, controlled by the information processing device 10, and may be a pyrolysis processing device, for example. According to the present embodiment, the information processing device 10 controls recycling processing in the recycling facility by controlling the collector 80, the classifier 81, and the recycling processor.

The information processing device 10 may have the following software configuration. At least one program used to control operation of the information processing device 10 is stored in the storage 12. The program stored in the storage 12, when read by the processor of the controller 13, causes the processor to function as the data acquisition unit 131, the classification unit 132 and the output unit 133.

The data acquisition unit 131 acquires used tire data regarding at least one of specifications or components of the used tires based on the information read from the used tires. According to the present embodiment, information read from the used tires includes an identification number of the used tires. The data acquisition unit 131 may acquire used tire data from the storage 12 when used tire data already stored in the storage 12 includes the identification number of a used tire being processed. The data acquisition unit 131 may acquire used tire data by accessing, via the network 40, a database in which the identification number and used tire data are associated, when the used tire data in the storage 12 does not include the identification number of a used tire being processed. That is, the recycling facility does not need to possess all of the used tire data, and can use a database managed by a producer of the tires 30 to accurately classify used tires and perform appropriate recycling, as described below.

The classification unit 132 classifies used tires into groups based on the used tire data acquired by the data acquisition unit 131. A group is a set of used tires that are similar in terms of included components. In order to suppress variation in quality of a product (the pyrolysate 82 according to the present embodiment) produced by recycling processing (pyrolysis according to the present embodiment) and to achieve desired quality, the used tires are grouped.

The classification unit 132 may classify used tires based on the specification data included in the used tire data. For example, using the first used tire data, the classification unit 132 may classify used tires based on at least one of category, type, size, rubber property, producer, or date of production of the used tires. In such a case, by classification as the tires 30, used tires can be indirectly classified by components. For example, the tires 30 of a specific type from the same producer may include similar components. Therefore, by grouping the used tires according to producer and type, variation in quality of the pyrolysate 82 can be suppressed. Further, the same or close to the same production date would not be expected to result in significant changes in the components of the tires 30. Therefore, by grouping the used tires according to producer, type, and time of production, the variation in the quality of the pyrolysate 82 can be further suppressed. The classification unit 132 may classify used tires based on the specification data contained in the used tire data, even when, for example, the producer of the tire 30 does not provide data regarding components (corresponding to the second used tire data).

The classification unit 132 may classify used tires based on component data included in the used tire data. For example, using the second used tire data, the classification unit 132 may classify used tires based on data regarding at least one of a polymer, a filler, or sulfur component of the used tires. In such a case, used tires can be directly classified by components. Thus, compared to indirect classification, suppressing variation in the quality of the pyrolysate 82 can be more effective.

Further, when the used tire data includes data on the structure of members of used tires, the classification unit 132 can also group the used tires based on members of the used tires. In such a case, a used tire comprising composite members can be easily disassembled member by member based on the data on the structure of the members of the used tire. The grouping after disassembly into members can increase the effectiveness of suppressing the variation in the quality of the pyrolysate 82. According to the present embodiment, classification into groups includes not only grouping the used tires themselves, but also disassembling the used tires into component members and grouping by component member.

The output unit 133 may output information such as the group into which the used tires are classified by the classification unit 132 to a display device or other device so that a manager or operator of the recycling facility can be informed. The display device may be, for example, a display included in the reader 70. Further, the display device may include a display or the like connected to the information processing device 10.

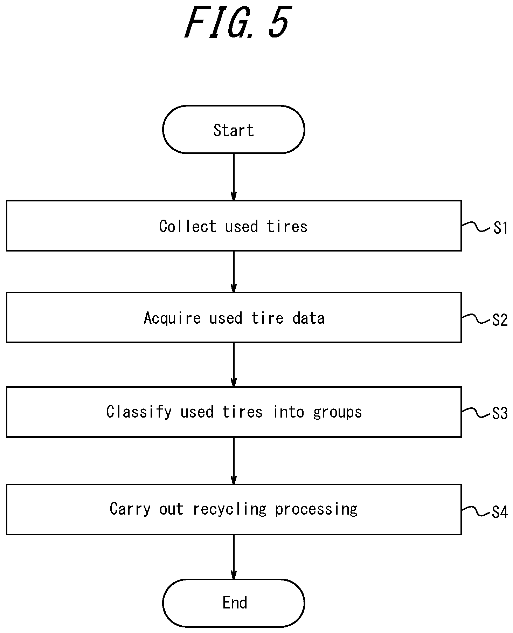

FIG. 5 is a flowchart illustrating processing of a method of recycling used tires according to the present embodiment, executed by the recycling system 1.

Used tires are collected by the collector 80 (step S1, collection step). The identifiers 32 of the used tires that are collected are read by the reader 70. According to the present embodiment, the information read from the used tires includes identification numbers of the used tires that are collected (that is, the used tires that are being processed).

Based on the information read from the used tires, the data acquisition unit 131 acquires used tire data from the storage 12 or a database of the producer via the network 40 as described above (step S2, data acquisition step).

The classification unit 132 classifies the used tires into groups based on the used tire data (step S3, classification step). Further, the controller 13 may control the classifier 81 so that the used tires are transported to the recycling processor of the group to which the used tires are assigned. Further, the used tires or members that are classified may be cut, crushed, or otherwise processed as required before being transported to the recycling processor.

The recycling processor carries out recycling processing of the used tires or members that have been classified, under appropriate conditions for each group (step S4, recycling processing step). Here, the conditions of the recycling processing are, for example, operating conditions of a pyrolysis processing device. For example, depending on the group, a temperature setting, processing time, or the like of the pyrolysis processing device are changed. In this way, the used tires or component members are grouped, and in each group, recycling processing is carried out under appropriate conditions for each group to obtain the pyrolysate 82 for each group. The pyrolysate 82 of each group is produced from used tires that include similar components, resulting in a product of the desired quality with little variation. Here, appropriate conditions are defined for each group and include temperature setting, processing time, and other operating conditions that are adjusted to improve the efficiency of the recycling processing. Therefore, although appropriate conditions typically vary from group to group, different groups may end up with the same conditions.

Here, the method of recycling used tires in FIG. 5 constitutes a method of producing pyrolysate by treating the recycling processing as pyrolysis and further including an extraction step to extract the pyrolysate 82 produced by pyrolysis. The method of producing pyrolysate produces pyrolysate of high quality. Further, the pyrolysate 82 produced by the method of producing pyrolysate or a processed product thereof can be used as portion of raw material to produce the tires 30 or a rubber product having high quality. That is, the method of producing pyrolysate and a step of producing the tires 30 or a rubber product can constitute a method of producing the tires 30 or a rubber product. Here, the tires 30 may be newly produced or may be retreaded tires. That is, the method of producing the tires 30 includes a method of producing retreaded tires.

As described above, the method of recycling used tires according to the present embodiment can improve the quality of products in recycling and recycling efficiency by appropriate classification regarding components. Further, using the method of recycling, a method of producing pyrolysate, a method of producing a rubber product, and a method of producing a tire are provided that can produce a high quality raw material (the pyrolysate 82) or product. The pyrolysate, rubber product, and tire produced by these methods of production are of higher quality than conventional products.

Although embodiments of the present disclosure have been described based on the drawings and examples, it should be noted that a person skilled in the art may make variations and modifications based on the present disclosure. Therefore, it should be noted that such variations and modifications are included within the scope of the present disclosure. For example, functions and the like included in each component or the like may be rearranged, and multiple components or the like may be combined into one or divided, as long as no logical inconsistency results. An embodiment according to the present disclosure may be realized as a method, a program executed by a processor provided to a device, or a storage medium on which the program is stored. The scope of the present disclosure should be understood to include these examples.

For example, to further improve quality, grouping of used tires at a recycling facility may be executed based on the compound content or degree of reduction of oil, age resistor, wax, or adhesive material in the used tires. Such classification can, for example, appropriately exclude impurities (such as Co) contained in carbon black, oil (such as terpene oil), age resistor, or the like obtained by pyrolysis. Here, the compound content and the degree of reduction may be estimated based on information from the time of new production of a product (hereinafter also referred to as "original product") before the used tire was disposed of. The information from the time of new production may be acquired from a computer of a producer of the original product of the used tire, or the like. The information from the time of new production may include, for example, compound content, mix ratio, date of production, recycled raw material information, and the like. Further, the compound content and the degree of reduction may be estimated by further acquiring information from the time of use of the original product, and may be based on the information from the time of new production and the information from the time of use of the original product. The compound content and the degree of reduction may be estimated by preparing in advance a degradation model based on past performance data and inputting information such as the time of production of a new product into the degradation model. The degradation model may be generated by, for example, machine learning.

Here, in order to acquire information on the original product from the time of use, the original product needs to be managed individually. For example, when the original product is the tire 30, information such as identification number, model number, or the like is specified by the indicator 31. The recycling system 1 may further include a management device (such as a computer connected by the network 40) for the tire 30 that manages such information. The management device for the tire 30 may manage information from the time of use in addition to the identification number, model number, or the like, by associating the information in a table or the like. The information processing device 10 may also have access to a table managed by the management device for the tire 30. The information from the time of use, for example, driving history, state of wear of the tire 30, and other measurements may have been input by a worker at a maintenance and inspection work site of a vehicle on which the tire 30, the original product, was mounted, and sent to the management device for the tire 30 as information from the time of use. Further, when retreading or the like is carried out on the tire 30, information such as the number of times retreading has been carried out may be input by a worker and sent to the management device for the tire 30 as information from the time of use. In the processing of group classification of used tires described above, correction of estimation of compound content and degree of reduction (for example, increasing the degree of reduction) may be carried out according to use condition of the original product (for example, retreading carried out a plurality of times, high wear, and the like). Here, the state of wear may be a measured value or a predicted value according to a known prediction method based on driving history or date of production.

For further quality improvement, a plurality of stages of grouping may be executed in the classification of used tires into groups, in particular grouping based on rubber blends of treads or state of wear of the used tires. The rubber blends of treads is taken into account to control the effect of silica and the like in the tread on the pyrolysate. Further, the state of wear of used tires is used to correct product information as described above. Therefore, the grouping can be carried out taking into account corrected component information of the used tires.

Further, the used tire data is described as including data regarding components such as a polymer, a filler, sulfur, or the like, but may also include information regarding material of the used tires (material information). The material information may then be used in group classification of used tires. The material information may indicate, for example, how many times some of the materials that make up a used tire have been recycled, if any. The material information may indicate, for example, what organic fibers are included. For example, the material information may indicate the fiber type of organic fibers such as PET, nylon, aramid, and the like. For example, based on material information, sorting aramids and the like, or sorting by nitrogen atoms included or not included, is preferable in terms of stable quality of oil obtained by recycling. Further, based on the material information, it is preferable, for example, to segregate carbon black with and without silica, in order to stabilize the quality of carbon black obtained in the recycling process. Further, the material information may include information regarding the inner liner. In such a case, it becomes possible to decrease the amount of halogen contained in butyl rubber obtained by recycling by sorting the inner liner according to whether the inner liner is halogenated butyl rubber (Cl, Br) or not, based on the material information in the collection of the inner liner.

Further, the method of recycling used tires may further include a step of disassembling the used tires into component members, and in the recycling processing step, recycling processing may be carried out on the component members of the used tires that have been classified, under appropriate conditions for each group. By dividing used tires into component members, such as tread, side, and inner liner, for example, and grouping by component members, more efficient recycling can be achieved. Further, it becomes possible to improve the quality of carbon black or oil obtained by recycling. Here, disassembly into component members is not limited to disassembly to the smallest unit. For example, the tread may be disassembled to include cap rubber, base rubber, and belt (as the tread portion). Further, disassembly into component members may be, for example, to the smallest unit of steel members, as required.

### REFERENCE SIGNS LIST

- 1: recycling system
- 10: information processing device
- 11: communicator
- 12: storage
- 13: controller
- 30: tire
- 31: indicator
- 32: identifier
- 40: network
- 60: server
- 70: reader
- 80: collector
- 81: classifier
- 82: pyrolysate
- 131: data acquisition unit
- 132: classification unit
- 133: output unit

## Claims

1. A method of recycling used tires, the method comprising:
a collection step of collecting used tires;
a data acquisition step of acquiring used tire data regarding at least one of specifications or components of the used tires, based on information read from the used tires;
a classification step of classifying the used tires into groups based on the used tire data; and
a recycling processing step of carrying out recycling processing of the used tires that have been classified, under appropriate conditions for each of the groups.

2. The method of recycling used tires according to claim 1, wherein, in the data acquisition step, the information read from the used tires includes identification numbers of the used tires, and the used tire data is acquired by accessing, via a network, a database in which the identification numbers are associated with the used tire data.

3. The method of recycling used tires according to claim 1 or 2, wherein
the used tire data includes at least one of data on category, type, size, rubber property, producer, or date of production of the used tires, and
the classification step classifies the used tires based on at least one of category, type, size, rubber property, producer, or date of production of the used tires.

4. The method of recycling used tires according to claim 1 or 2, wherein
the used tire data includes data regarding at least one of a polymer, a filler, or sulfur component of the used tires, and
the classification step classifies the used tires based on the data regarding at least one of the polymer, the filler, or the sulfur component of the used tires.

5. The method of recycling used tires according to any one of claims 1 to 4, wherein the used tire data includes data on structure of members of the used tires.

6. The method of recycling used tires according to any one of claims 1 to 5, wherein, in the classification step, a plurality of stages of grouping are executed based on rubber blends of treads or state of wear of the used tires.

7. The method of recycling used tires according to any one of claims 1 to 6, wherein, in the classification step, grouping is executed based on compound content or degree of reduction of oil, age resistor, wax, or adhesive material in the used tires.

8. The method of recycling used tires according to any one of claims 1 to 7, wherein the used tire data includes material information indicating a fiber type of an organic fiber.

9. A method of producing pyrolysate, the method comprising:
a collection step of collecting used tires;
a data acquisition step of acquiring used tire data regarding at least one of specifications or components of the used tires, based on information read from the used tires;
a classification step of classifying the used tires into groups based on the used tire data; and
a recycling processing step of carrying out recycling processing, which is pyrolysis, on the used tires that have been classified, under appropriate conditions for each of the groups; and
an extraction step of extracting pyrolysate produced by the pyrolysis.

10. Pyrolysate produced by the method of producing pyrolysate according to claim 9.

11. A method of producing a rubber product, wherein pyrolysate produced by the method of producing pyrolysate according to claim 9 is used as a portion of raw material to produce the rubber product.

12. A rubber product produced by the method of producing a rubber product according to claim 11.

13. A method of producing a tire, wherein pyrolysate produced by the method of producing pyrolysate according to claim 9 is used as a portion of raw material to produce the tire.

14. A tire produced by the method of producing a tire according to claim 13.

15. A method of recycling used tires, the method comprising:
a collection step of collecting used tires;
a data acquisition step of acquiring used tire data regarding at least one of specifications or components of the used tires, based on information read from the used tires;
a step of disassembling the used tires into component members;
a classification step of classifying the component members of the used tires into groups based on the used tire data;
a recycling processing step of carrying out recycling processing of the component members of the used tires that have been classified, under appropriate conditions for each of the groups.
